# EUROPEAN PATENT APPLICATION

(11) **EP 2 853 358 A1**
(43) Date of publication of application: **01.04.2015**
(21) Application number: 12877115.1
(22) Date of filing: 21.05.2012
(51) Int. Cl.: B25J 19/00, B25J 19/06

(54) **ROBOT AND ROBOT SYSTEM**

(71) Applicant: Kabushiki Kaisha Yaskawa Denki, Kitakyushu-shi, Fukuoka 806-0004 (JP)
(72) Inventor: SHIRAKI, Tomoyuki, Kitakyushu-shi Fukuoka 806-0004 (JP); ICHIBANGASE, Atsushi, Kitakyushu-shi Fukuoka 806-0004 (JP); SAJIKAWA, Yuji, Kitakyushu-shi Fukuoka 806-0004 (JP); MATSUO, Tomohiro, Kitakyushu-shi Fukuoka 806-0004 (JP); ISHIKAWA, Shinichi, Kitakyushu-shi Fukuoka 806-0004 (JP); KAWANO, Tomoki, Kitakyushu-shi Fukuoka 806-0004 (JP)
(74) Representative: Grünecker, Kinkeldey, Stockmair & Schwanhäusser
(86) International application number: PCT/JP2012/062949
(87) International publication number: WO 2013/175554

(57) **Abstract**

To provide a robot and a robot system having higher reliability in a safety aspect. The robot is provided with a base to be fixed to an installation surface, and an arm unit having a plurality of arm bodies sequentially and revolvably coupled with each other with one end coupled to the base through a shaft. The arm unit has a stopper mechanism having a movable stopper member capable of restricting a revolving motion of the arm bodies around the shaft to a predetermined revolving range. The movable stopper member is provided to one link of one of the pairs of links coupled through the shaft, whereas the fixed stopper member, which is engaged with the movable stopper member, is provided to another link of the one of the pairs of links.

## Description

### Field

A disclosed embodiment relates to a robot and a robot system.

### Background

Conventionally, as a human-friendly robot, there has been known a robot that is provided with a base, which is fixed to a predetermined installation surface, and an arm unit, which has a plurality of arm bodies sequentially coupled to the base through a shaft, and that works with a human. It is requested for the robot, which is provided with the arm unit, to decrease or avoid an unintended contact with another object including the human as much as possible.

Another conventional human-friendly robot is provided with a control device for performing operation control of an arm unit so as to cause no damage to a human even when the arm unit comes in contact therewith so that the robot can coexist in harmony with people. In this robot, the control device controls the operation of the arm unit based on software, such that the arm unit comes into contact with people in an optimal manner (see Patent Literature 1, for example).

### Citation List

### Patent Literature

Patent Literature 1: Japanese Patent Application Laid-open No. 2008-302496

### Summary

### Technical Problem

However, when the robot is used to collaborate with people, the operation control solely dependent on software, as disclosed in Patent Literature 1, is not sufficient, and further improvement in reliability and safety is desirable.

One aspect of an embodiment has been made in view of the above, and an objective thereof is to provide a robot and a robot system having higher reliability in terms of safety as a human-friendly robot.

### Solution to Problem

According to an aspect of an embodiment, a robot includes: a base to be fixed to an installation surface; and an arm unit having a plurality of arm bodies sequentially and revolvably coupled with each other with one end coupled to the base through a shaft, wherein the arm unit includes a stopper mechanism having a movable stopper member being capable of restricting a revolving motion of the arm bodies around the shaft to a predetermined revolving range.

### Advantageous Effects of Invention

According to one aspect of the embodiment, it is possible to provide a human-friendly robot having higher reliability in terms of safety.

### Brief Description of Drawings

FIG. 1 is an explanatory drawing illustrating a work area in which a robot system according to an embodiment is installed.
FIG. 2 is an explanatory drawing illustrating a turning area of an arm unit of a robot in the robot system according to the embodiment.
FIG. 3 is an explanatory drawing illustrating a side view of a stopper mechanism.
FIG. 4 is an explanatory drawing illustrating a plane view of the stopper mechanism.
FIG. 5 is an explanatory drawing illustrating an example of control of the stopper mechanism by a controller.

### Description of Embodiments

Hereinafter, an embodiment of a robot and a robot system disclosed in the present application is described in detail with reference to the attached drawings. Note that the present invention is not to be limited by the embodiment described below.

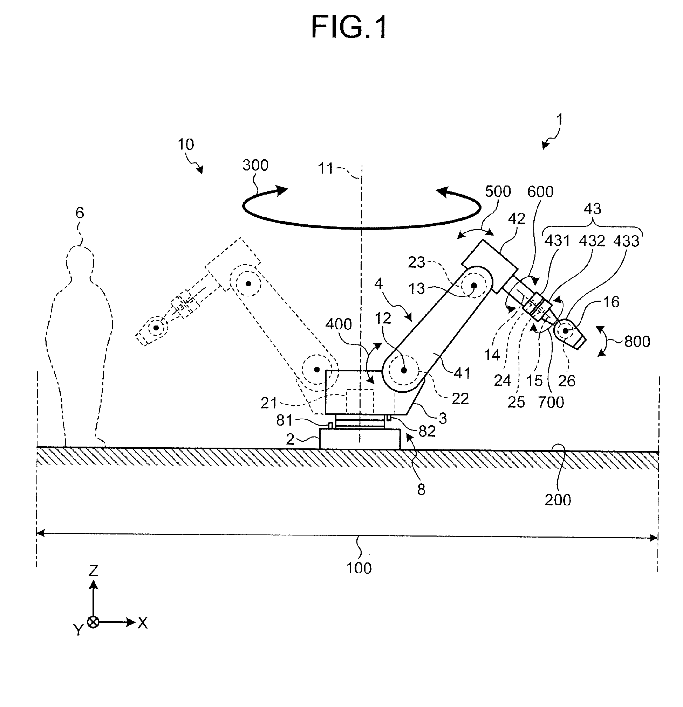

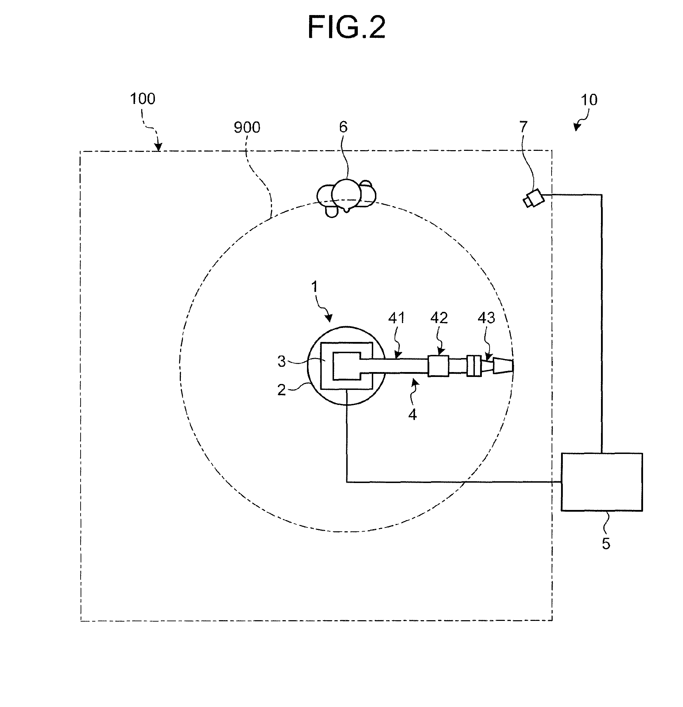

FIG. 1 is an explanatory drawing illustrating a work area 100 in which a robot system 10 having a robot 1 according to the embodiment is installed, and FIG. 2 is an explanatory drawing illustrating a turning area of an arm unit 4 of the robot 1 in the robot system 10.

The robot system 10 according to the embodiment is provided with the robot 1. As illustrated in FIG. 1, the robot system 10 is installed by setting up the robot 1 in a predetermined position on a floor 200 in a predetermined work area 100 of which a moving body such as an operator 6 can go in and out. Note that a position to set up the robot 1 may be set as appropriate depending on work. Here, the robot 1 is set up at a substantially central position of the work area 100. The work area 100, may be partitioned into a working booth (not illustrated) in a production line in a factory and the like.

As illustrated in FIG. 2, the robot system 10 is provided with a controller 5 configured to control operation of the robot 1. In the controller 5, control command contents for the robot 1 is stored in advance, and the robot 1 is controlled based on the stored contents. The controller 5 is described in detail below.

As illustrated in FIG. 1, the robot 1 is provided with a base 2 installed on the floor 200, and the arm unit 4 turnably provided on the base 2.

The arm unit 4 is provided with an arm base body 3, a first arm body 41, a second arm body 42, and a wrist unit 43 constituted of a first wrist 431, a second wrist 432, and a third wrist 433, each sequentially coupled to the base 2 through a shaft. Then, an end effector (not illustrated), which is suitable for the work given to the robot 1, is attached to a tip of the third wrist 433. A maximum turning locus 900 illustrated in FIG. 2 is a turning locus of the robot 1 when the arm unit 4 is extended to the maximum.

Thus, the robot 1 according to this embodiment is constituted of an articulated robot having the arm base body 3, the first arm body 41, the second arm body 42, and the wrist unit 43, which are movable parts.

As described below, the robot 1 is the articulated robot provided with a first joint unit 21 to a sixth joint unit 26, and the movable parts thereof are revolvable around an axis.

The arm base body 3 also serves as a body portion of the robot 1, and it is revolvably coupled to the substantially cylindrical base 2 installed on the floor 200 in a fixed state through the first joint unit 21. The first joint unit 21 is provided substantially at a center of the base 2, and is provided with a first shaft 11 extending in a vertical direction (Z direction).

Then, the first shaft 11 is interlocked and coupled to a first transmission mechanism provided with a first motor and a first reducer. Accordingly, the arm base body 3 is revolved horizontally to the base 2, which is fixed to the floor 200, around the first shaft 11 by the first transmission mechanism (see an arrow 300).

As illustrated, an upper surface of the base 2 and a lower surface of the arm base body 3 are each provided with a projected body (a first projected body 81 and a second projected body 82), which is positioned so as to be on a virtual circumference centering on the first shaft 11 and constitutes a stopper mechanism 8. A specific configuration and the like of the stopper mechanism 8 are described below.

As described above, the second joint unit 22 is provided to one side portion of the arm base body 3, and the first arm body 41 is revolvably coupled through the second joint unit 22. Since the first arm body 41 is coupled to a position eccentric to the first shaft 11, the second arm body 42 and the wrist unit 43, which include the first arm body 41 and are sequentially coupled to the first arm body 41 through the shaft, are also turned centering on the first shaft 11.

The second joint unit 22 is provided with a second shaft 12 extending in an orthogonal direction to the first shaft 11, or a front and back horizontal direction (Y direction) in the drawing. Then, the second shaft 12 is interlocked and coupled to a second transmission mechanism (not illustrated) provided with a second motor and a second reducer. Accordingly, the first arm 41 is revolved around the second shaft 12, or is swung in a vertical direction, by the second transmission mechanism (see an arrow 400).

The third joint unit 23 is provided on a tip side of the first arm body 41, which is the longest among the movable parts. The substantially L-shaped second arm body 42 is coupled through the third joint unit 23.

The third joint unit 23 is provided with a third shaft 13 extending in a parallel direction to the second shaft 12, or extending in the same direction as the second shaft 12 being orthogonal to the first shaft 11. Then, the third shaft 13 is interlocked and coupled to a third transmission mechanism provided with a third motor and a third reducer. Accordingly, the second arm body 42 is revolved around the third shaft 13, or is swung in the vertical direction, by the third transmission mechanism (see an arrow 500).

The fourth joint unit 24 is provided on a tip side of the second arm body 42. The first wrist 431 is coupled through the fourth joint unit 24.

Note that the wrist unit 43 is constituted of the cylindrical first wrist 431 coupled to the fourth joint unit 24, the second wrist 432 coupled to the first wrist 431, and the third wrist 433 provided with the end effector.

The fourth joint unit 24, through which the first wrist 431 is interlocked and coupled, is provided with a fourth shaft 14 extending in a orthogonal direction to the third shaft 13, or a right and left horizontal direction (X direction) in the drawing. Then, the fourth shaft 14 is interlocked and coupled to a fourth transmission mechanism provided with a fourth motor and a fourth reducer. Accordingly, the first wrist 431 interlocked and coupled in a coaxial direction with the fourth shaft 14 is revolved around the fourth shaft 14, or is rotated around the fourth shaft 14 by the fourth transmission mechanism (see an arrow 600).

The fifth joint unit 25 is provided on a tip side of the first wrist 431, and the second wrist 432 is coupled in the coaxial direction through the fifth joint unit 25.

The fifth joint unit 25 is provided with a fifth shaft 15 extending in the coaxial direction with the fourth shaft 14, or the right and left horizontal direction (X direction) in the drawing. Then, the fifth shaft 15 is interlocked and coupled to a fifth transmission mechanism provided with a fifth motor and a fifth reducer. Therefore, the second wrist 432 interlocked and coupled in a coaxial direction with the fifth shaft 15 is revolved around the fifth shaft 15, or is rotated around the fifth shaft 15 by the fifth transmission mechanism (see an arrow 700).

The sixth joint unit 26 is provided on a tip side of the second wrist 432, and the third wrist 433 is coupled through the sixth joint unit 26.

The sixth joint unit 26 is provided with a sixth shaft 16 extending in an orthogonal direction to the fifth shaft 15, or the front and back horizontal direction (Y direction) in the drawing. Then, the sixth shaft 16 is interlocked and coupled to a sixth transmission mechanism provided with a sixth motor and a sixth reducer. Therefore, the third wrist 433 is revolved around the sixth shaft 16, or is swung in the vertical direction, by the sixth transmission mechanism (see an arrow 800).

As described above, the robot 1 according to this embodiment is provided with the arm unit 4, which is revolvably provided to the base 2 provided on the floor 200, which is a predetermined installation surface.

The arm unit 4 is provided with: the arm base body 3 revolvably provided around the first shaft 11; the first arm body 41 revolvably provided around the second shaft 12 to the arm base body 3; the second arm body 42 revolvably provided around the third shaft 13 to the first arm body 41; and the wrist unit 43 revolvably provided to the second arm body 42.

The wrist unit 43 is provided with the first wrist 431, the second wrist 432, and the third wrist 433. The first wrist 431 is revolvably provided around the fourth shaft 14 to the second arm body 42. The second wrist 432 is revolvably provided around the fifth shaft 15 to the first wrist 431. The third wrist 433 is revolvably provided around the sixth shaft 16 to the second wrist 432, and has the predetermined end effector attached to a tip thereof.

The arm base body 3, the first arm body 41, the second arm body 42, the first wrist 431, the second wrist 432, and the third wrist 433 are a plurality of links revolvably coupled around the shafts, and constitute movable parts of the robot 1. These links are revolved around each of the shafts (the first shaft 11 to the sixth shaft 16) by the motor provided to each of the transmission mechanisms.

Note that in this embodiment, the arm base body 3 coupled to the base 2 and the wrist unit 43 coupled to the second arm body 42 are included in the arm unit 4. That is, the arm base body 3 as well as the wrist unit 43, which is constituted of the first wrist 431, the second wrist 432, and the third wrist 433, are included in a concept of the arm body.

As illustrated in FIG. 2, the controller 5 provided to the robot system 10 is connected to the robot 1. The controller 5 is provided with a central processing unit (CPU), a read only memory (ROM), a random access memory (RAM), and a storage unit such as a hard disk, which are not illustrated. Then, the controller 5 reads a program stored in the storage unit by the CPU, and following the program, drives the arm base body 3, the first arm body 41, the second arm body 42, the first wrist 431, the second wrist 432, and the third wrist 433, which are the links.

As illustrated, the controller 5 is also electrically connected to a moving body detection unit 7 constituted of a proximity sensor for detecting movement of a moving body such as the operator 6 within the work area 100. The moving body detection unit 7 is disposed within the work area 100 independently from the robot 1. As the moving body detection unit 7, it is also possible to use a camera capable of monitoring inside of the work area 100 entirely.

Then, the controller 5 receives a detection result of the moving body detection unit 7, and based on the received detection result, when it determines that the operator 6 exists within a predetermined area, for example, it mechanically restricts turning of the arm unit 4 by driving the above-described stopper mechanism 8 provided in the arm unit 4. That is, the stopper mechanism 8 is capable of making revolving motion of the arm base body 3, which is an arm body, around the first shaft 11 to be restricted to a predetermined revolving range.

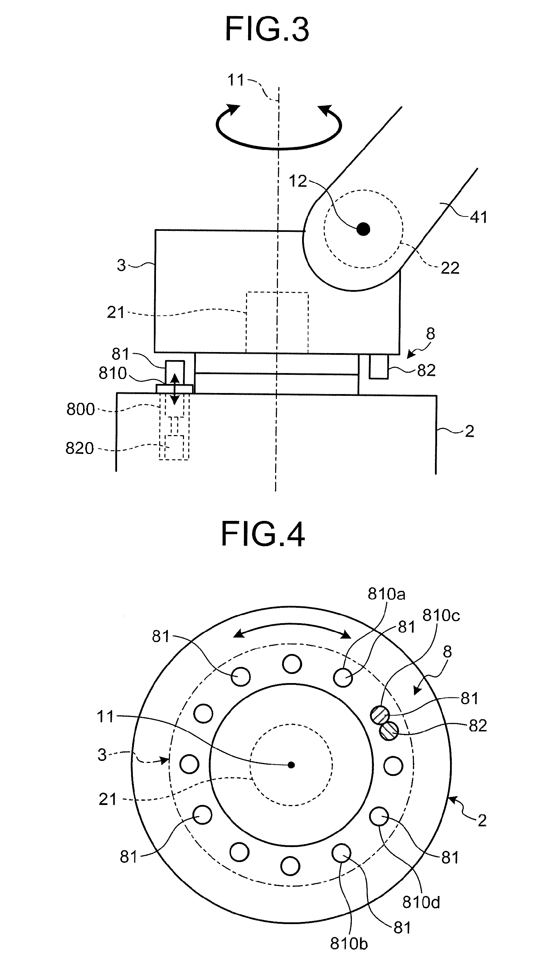

Hereinafter, the stopper mechanism 8 according to this embodiment is specifically described with reference to FIGS. 3 and 4. FIG. 3 is an explanatory drawing illustrating a side view of the stopper mechanism 8 provided to the robot 1, and FIG. 4 is an explanatory drawing illustrating a plane view of the stopper mechanism 8.

As illustrated in FIG. 3, the first projected body 81 is retractably provided on an upper surface of the base 2 as a movable stopper member so as to be positioned on the virtual circumference centering on the first shaft 11. To make it retractable, here, a hole portion 800 is provided in the base 2 to fit the first projected body 81 in a vertically slidable manner while a cylinder device 820, which is interlocked and coupled to the first projected body 81, is arranged thereinside. Then, by driving the cylinder device 820, the first projected body 81 is made to be retractable from a stopper gateway 810 of the hole portion 800 provided on the upper surface of the base 2.

On the other hand, in the same way, the second projected body 82 is fixedly installed on a lower surface of the arm base body 3 as a fixed stopper member in a state of being projected downward so as to be positioned on the virtual circumference centering on the first shaft 11.

Therefore, when the first projected body 81, which is the movable stopper member, is in a state of being retracted within the base 2, the arm base body 3 is turnable centering on the first shaft 11. However, when the first projected body 81, which is the movable stopper member, is in a state of being projected from the base 2, as illustrated in FIG. 4, the second projected body 82 of the arm base body 3, which is turning, eventually abuts against and engages with the first projected body 81, whereby the turning is restricted.

Accordingly, in the robot 1 according to this embodiment, it is possible to mechanically restrict revolving of the arm base body 3 (arm body) by using the movable stopper member. Therefore, reliability can be improved compared to the operation control using the software only, whereby it realizes a configuration that is more preferable as the human-friendly robot 1.

As illustrated in FIG. 4, in this embodiment, the plurality of first projected bodies 81, which is the movable stopper member, is provided around the first shaft 11 at a predetermined interval. That is, among the plurality of first projected bodies 81 provided on the base 2, by selecting two first projected bodies 81 apart at a predetermined distance so that the second projected body 82 is placed therebetween, which is fixedly installed to the arm base body 3, and by allowing the two to be projected, it is possible to restrict a revolving range of the arm unit 4 as well as the first arm body 41.

Accordingly, the stopper mechanism 8 according to the embodiment is capable of restricting the revolving motion of the first arm body 41, which is coupled to the base 2, to the predetermined revolving range.

Therefore, the controller 5 detects the movement of the moving body such as the operator 6, for example, within the work area 100, and based on the detection result, it is possible to change a position where the first projected body 81 (movable stopper member) engages with the second projected body 82 (fixed stopper member).

For example, the revolving motion of the arm unit 4 can be restricted to a predetermined revolving range according to the position of the operator 6, for example, whether the operator 6 is in a first area, in a second area, or in a third area that are set in advance within the work area 100.

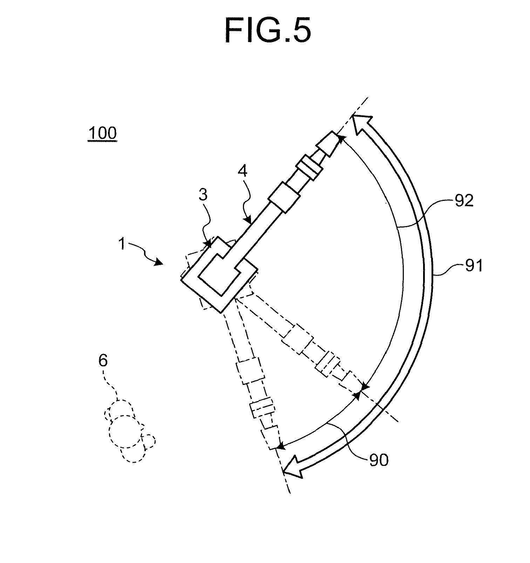

FIG. 5 is an explanatory drawing illustrating an example of control of the stopper mechanism 8 by the controller 5. For example, assume that when the revolving range of the arm unit 4 is not restricted, the moving body detection unit 7 detects that the operator 6 has entered the first area (not illustrated), whereby the moving body detection unit 7 transmits a detection result to the controller 5.

The controller 5, which has not been restricting the revolving range of the arm unit 4 so far, restricts the revolving range of the arm unit 4 to a first range 91 corresponding to the first area when it receives the detection result from the moving body detection unit 7 as illustrated in FIG. 5.

Specifically, among the plurality of first projected bodies 81 illustrated in FIG. 4, by selecting the first projected body 81 inside of a first stopper gateway 810a and the first projected body 81 inside of a second stopper gateway 810b, for example, and by driving the cylinder device 820, two first projected bodies 81 are projected. Accordingly, motion of the arm unit 4 is restricted to the first range 91.

If the moving body detection unit 7 detects that the operator 6 has moved even closer to the robot 1 and has entered inside of the second area (not illustrated), for example, the controller 5, when it detects a detection result from the moving body detection unit 7, restricts the revolving range of the arm unit 4 to a second range 92 corresponding to the second area as illustrated in FIG. 5.

Specifically, among the plurality of first projected_bodies 81 illustrated in FIG. 4, by selecting the first projected body 81 inside of a third stopper gateway 810c and the first projected body 81 inside of a fourth stopper gateway 810d, for example, and by driving the cylinder device 820, two first projected bodies 81 are projected. Accordingly, the motion of the arm unit 4 is restricted to the second range 92. Note that in the stopper mechanism 8 according to this embodiment, as it is clear from the configuration illustrated in FIG. 4, the revolving range to which the revolving motion of the arm unit 4 is limited is determined by using a minimum revolving range 90 illustrated in FIG. 5 as a unit.

Incidentally, the above-described stopper mechanism 8 of the robot 1 is configured to have the first projected body 81, or the movable stopper member, provided to the base 2, which is one of the links, and the second projected body 82, or the fixed stopper member, provided to the arm base body 3.

However, it is also possible to reverse the positions to arrange the movable stopper member and the fixed stopper member. That is, the movable stopper member may be provided to any one of a pair of links constituted of the base 2 and the arm base body 3, which are coupled through the first shaft 11, whereas the fixed stopper member may be provided to any of the other of the links (the base 2 and the arm base body 3).

The stopper mechanism 8 according to this embodiment is configured to have the fixed stopper member constituted of the second projected body 82; however, it is also possible to configure the fixed stopper member by forming an arc-shaped groove portion having a predetermined length on a lower surface of the arm base body 3 by centering on the first shaft 11, for example.

That is, there is formed the groove portion having an groove edge portion formed at a desired position, and the first projected body 81, which is the movable stopper member, is loosely fit within the groove portion. With this configuration as well, when the arm base body 3 is turned, the first projected body 81 eventually abuts against the groove edge portion, whereby the turning is restricted.

In the above-described embodiment, the moving body detection unit 7 is disposed within the work area 100 independently from the robot 1; however, the moving body detection unit 7 may also be provided integrally with the robot 1.

Note that restriction of the revolving motion of the arm unit 4 may be controlled as appropriate as an interrupt by using the moving body detection unit 7, or may be set in advance by determining the revolving range of the arm unit 4.

As described above, the robot 1, having the above-described configuration according to the embodiment, and the robot system 10 provided with the robot 1 can further improve the reliability in terms of safety and the like of so as to be more suitable as the human-friendly robot.

Incidentally, in the above-described embodiment, the stopper mechanism 8 is configured to be provided between the base 2 and the arm base body 3, and it has been described that the revolving motion of the arm base body 3 can be restricted to the predetermined revolving range.
The stopper mechanism 8, however, may also be capable of restricting the revolving motion of another arm body such as the first arm body 41, the second arm body 42, the first wrist 431, the second wrist 432, and the third wrist 433 around the shaft to a predetermined revolving range. Alternatively, it may also be capable of restricting the revolving motion of all of the arm bodies around the shaft to the predetermined revolving range.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

### Reference Signs List

- 1: robot
- 2: base
- 3: arm base body
- 4: arm unit
- 5: controller
- 6: operator
- 7: moving body detection unit
- 8: stopper mechanism
- 81: first projected body (movable stopper member)
- 82: second projected body (fixed stopper member)
- 100: work area (predetermined area)

## Claims

1. A robot comprising:
a base to be fixed to an installation surface; and
an arm unit having a plurality of arm bodies sequentially and revolvably coupled with each other with one end coupled to the base through a shaft, wherein
the arm unit includes a stopper mechanism having a movable stopper member being capable of restricting a revolving motion of the arm bodies around the shaft to a predetermined revolving range.

2. The robot according to claim 1, wherein
the base and the arm body coupled through the shaft and the arm bodies coupled through the shaft form pairs of links,
the stopper mechanism is provided with a fixed stopper member configured to be engaged with the movable stopper member,
the movable stopper member is provided to one link of one of the pairs of links, and
the fixed stopper member is provided to another link of the one of the pairs of links.

3. The robot according to claim 2, wherein
the movable stopper member is a first projected body retractably provided on a virtual circumference centering on the shaft, which couples the pair of links, and
the fixed stopper member is a second projected body fixedly installed on the virtual circumference.

4. The robot according to claim 1, 2, or 3, wherein
the stopper mechanism restricts the revolving motion of the arm bodies coupled to the base to the predetermined revolving range.

5. The robot according to claim 2, 3, or 4, wherein
a plurality of movable stopper members is provided at a predetermined interval around the shaft, by which the pair of links is coupled.

6. The robot according to any one of claims 1 to 5, comprising:
a controller configured to detect a movement of a moving body including a human within a predetermined area, and based on a detection result, to change a position to engage the movable stopper member with the fixed stopper member.

7. The robot according to claim 6, wherein
the controller is configured to change a revolving range of the arm bodies according to a position of the moving body.

8. The robot according to claim 6 or 7, comprising:
a moving body detection unit configured to detect the movement of the moving body including a human within the predetermined area and to output the detection result to the controller.

9. A robot system comprising:
the robot according to claim 6 or 7 disposed within a predetermined area, and
a moving body detection unit disposed within the predetermined area independently from the robot, configured to detect a movement of a moving body including a human within the predetermined area, and configured to output a detection result to the controller of the robot.
